# EUROPEAN PATENT APPLICATION

(11) **EP 3 467 901 A1**
(43) Date of publication of application: **10.04.2019**
(21) Application number: 17806691.6
(22) Date of filing: 30.05.2017
(51) Int. Cl.: H01M 2/10

(54) **BATTERY PACK**

(30) Priority: 30.05.2016 JP 2016107901
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: ENOMOTO, Takashi, Tokyo 105-8001 (JP); KAWAMURA, Koichi, Tokyo 105-8001 (JP); UCHIDA, Toshinori, Tokyo 105-8001 (JP); HOSHINO, Mitsuhiro, Tokyo 105-8001 (JP); SHUDO, Tadashi, Tokyo 105-8001 (JP); WADA, Satoshi, Tokyo 105-8001 (JP)
(74) Representative: AWA Sweden AB
(86) International application number: PCT/JP2017/020133
(87) International publication number: WO 2017/209138

(57) **Abstract**

A battery pack of an embodiment includes a plurality of battery cells, a pipe, a bar, and an insulating plate, for example. The battery cells are aligned in a first direction and are each provided with an opening. The pipe is hollow and inserted into each opening in the first direction. The bar is inserted into a hollow of the pipe. The insulating plate is provided between opposing faces of the battery cells.

## Description

### FIELD

Embodiment of the present invention relate to a battery pack.

### BACKGROUND

Conventionally, battery packs are known which include metal-case battery cells including electrodes on the top walls, and holders for supporting the battery cells.

### CITATION LIST

### Patent Literature

Patent Literature 1: WO 2013/073046

### SUMMARY OF THE INVENTION

### Problem to be Solved by the Invention

It is preferable to provide such a battery back with a novel configuration and less inconvenience, for example.

### Means for Solving Problem

A battery pack of an embodiment includes a plurality of battery cells, a pipe, a bar, and an insulating plate, for example. The battery cells are aligned in a first direction and are each provided with an opening. The pipe is hollow and inserted into each opening in the first direction. The bar is inserted into a hollow of the pipe. The insulating plate is provided between opposing faces of the battery cells.

### BRIEF DESCRIPTION OF DRAWINGS

FIG. 1 is an exemplary perspective view of a battery cell of a battery pack according to a first embodiment.
FIG. 2 is an exemplary exploded perspective view of the battery pack according to the first embodiment.
FIG. 3 is an exemplary exploded perspective view of a first modification of the battery pack according to the first embodiment.
FIG. 4 is an exemplary exploded perspective view of a battery pack according to a second embodiment.
FIG. 5 is an exemplary perspective view of a spacer of the battery pack according to the second embodiment.
FIG. 6 is an A-A sectional view of FIG. 5.
FIG. 7 is an exemplary exploded perspective view of a first modification of the battery pack according to the second embodiment.
FIG. 8 is an exemplary exploded perspective view of a battery pack according to a third embodiment.
FIG. 9 is an exemplary exploded perspective view of a battery pack according to a fourth embodiment.
FIG. 10 is an exemplary sectional view of part of the battery pack according to the fourth embodiment.
FIG. 11 is an exemplary exploded perspective view of a first modification of the battery pack according to the fourth embodiment.
FIG. 12 is an exemplary sectional view of part of the first modification of the battery pack according to the fourth embodiment.
FIG. 13 is an exemplary perspective view of a battery pack according to a fifth embodiment.
FIG. 14 is an exemplary perspective view of an insulating plate of the battery pack according to the fifth embodiment.
FIG. 15 is an enlarged view of part of FIG. 14.
FIG. 16 is an exemplary exploded perspective view of a battery pack according to a sixth embodiment.
FIG. 17 is an exemplary perspective view of a support member of the battery pack according to the sixth embodiment.
FIG. 18 is an exemplary perspective view of the battery pack according to the sixth embodiment.
FIG. 19 is an exemplary plan view of a spacer of the battery pack according to the sixth embodiment.
FIG. 20 is an exemplary sectional view of the spacer of the battery pack according to the sixth embodiment.

### DETAILED DESCRIPTION

The following discloses exemplary embodiments of the present invention. The configurations of the embodiments and actions and results (effects) brought about by the configurations described below are merely exemplary. The present invention can also be achieved by configurations other than those disclosed in the following embodiments. The present invention can attain at least one of various effects (including derivative effects) obtained by the configurations.

The following describes the embodiments with reference to the accompanying drawings. The following embodiments include similar or same elements. Thus, in the following, similar or same elements are denoted by common reference numerals, and overlapping descriptions are omitted. In the present specification, ordinals are used for distinguishing parts and members alone and are not intended to indicate order or priority.

### First Embodiment

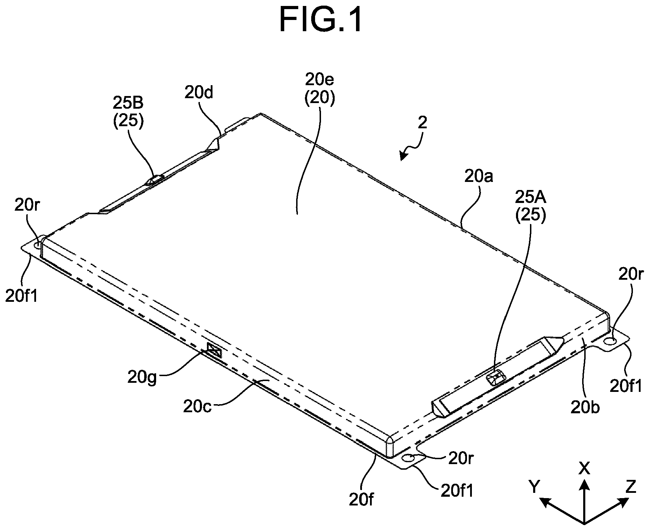

FIG. 1 is a perspective view of a battery cell 2 of a battery pack 1. The battery cell 2 includes a casing 20 and a pair of electrodes 25. One of the electrodes 25 is a positive electrode 25A, and the other is a negative electrode 25B. In the following description, directions are defined for convenience as illustrated in the drawings. An X direction is along the thickness (height) of the battery cell 2, a Y direction is along the length of the battery cell 2, and a Z direction is along the lateral (width) of the battery cell 2. The X direction, the Y direction, and the Z direction are orthogonal to one another. The X direction is an example of a first direction.

The battery cell 2 includes a lithium-ion secondary battery, for example. The battery cell 2 may be another secondary battery such as a nickel-hydrogen battery or a nickel-cadmium battery. The lithium-ion secondary battery is a kind of nonaqueous electrolyte secondary battery, in which lithium ions in an electrolyte work for electric conduction. Examples of a positive electrode material include lithium-manganese composite oxides, lithium-nickel composite oxides, lithium-cobalt composite oxides, lithium-nickel-cobalt composite oxides, lithium-manganese-cobalt composite oxides, spinel lithium-manganese-nickel composite oxides, and lithium phosphates having an olivine structure; examples of a negative electrode material include oxide materials such as lithium titanate (LTO) and oxide materials such as niobium composite oxides. Examples of the electrolyte (an electrolytic solution, for example) include sole or combination of organic solvents mixed with lithium salt such as fluorine complex salts (LiBF4 or LiPF6, for example), such as ethylene carbonate, propylene carbonate, diethyl carbonate, ethylmethyl carbonate, and dimethyl carbonate. The battery cell 2 is also referred to as a cell, for example.

As illustrated in FIG. 1, the casing 20 of the battery cell 2 has a thin flat rectangular parallelepiped shape in the X direction. The casing 20 has a plurality of walls 20a to 20f. The wall 20e and the wall 20f extend in a direction orthogonal to the X direction (YZ plane) and are spaced apart from each other in parallel in the X direction. One of the walls 20e and 20f can be referred to as a bottom wall or a lower wall, and the other can be referred to as a top wall or an upper wall. The casing 20 is formed of stainless steel (SUS) having a relatively small thickness, for example.

The walls 20a to 20d are located at the periphery of the wall 20e and extend between the wall 20e and the wall 20f. The wall 20a and the wall 20c extend in a direction orthogonal to the Z direction (XY plane) and are spaced apart from each other in parallel in the Z direction. The walls 20a and 20c are referred to as side walls or peripheral walls and form two long sides of the four sides of the casing 20. One of the walls 20a and 20c is provided with a valve 20g for gas venting. The valve 20g is opened to reduce the pressure within the casing 20 when exceeding a threshold. The valve 20g is provided at about the center of the wall 20c in the Y direction, for example. The walls 20a and 20c are an example of a second wall.

The wall 20b and the wall 20d extend in a direction orthogonal to the Y direction (XZ plane) and are spaced apart from each other in the Y direction. The walls 20b and 20d are referred to as side walls or peripheral walls and form two short sides of the four sides of the casing 20. One of the walls 20b and 20d is provided with the positive electrode 25A, and the other is provided with the negative electrode 25B. The walls 20b and 20d are an example of a first wall.

At the four corners of the casing 20, four attachment tabs 20f1 protrude from the wall 20f. The attachment tabs 20f1 are provided with openings 20r as mounting holes. The openings 20r pass through the respective attachment tabs 20f1 in the X direction. The openings 20r are also referred to as through bores or through holes. The attachment tabs 20f1 are not limited to this example and may be provided only at two of the four corners of the casing 20 on one Y-directional side or only at two diagonal corners of the four corners of the casing 20, for example.

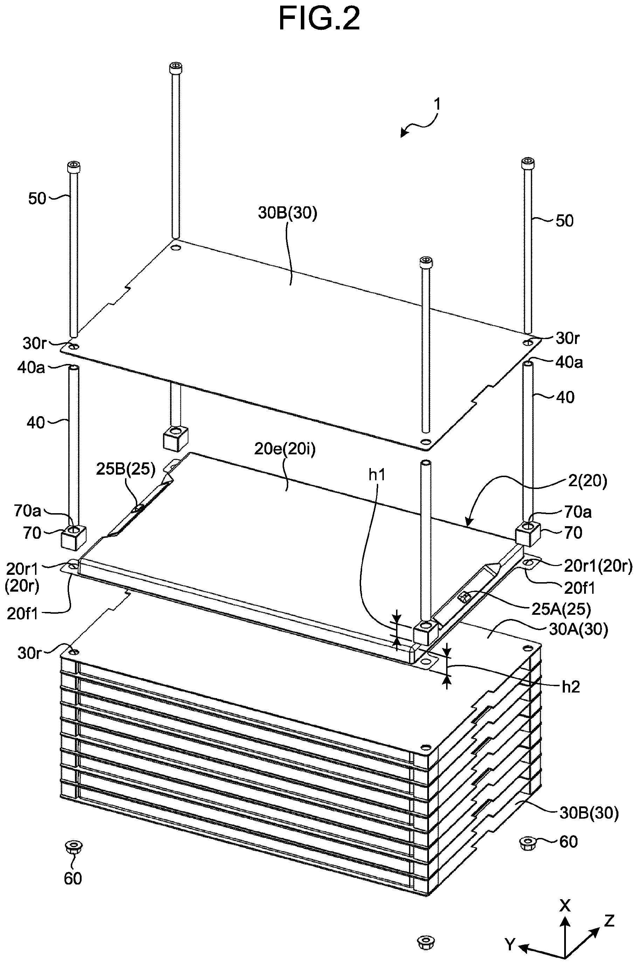

FIG. 2 is an exploded perspective view of the battery pack 1. As illustrated in FIG. 2, the battery pack 1 includes a plurality of battery cells 2, insulating plates 30, pipes 40, bolts 50, flange nuts 60, and spacers 70, for example. The bolts 50 are an example of a bar. The numbers, arrangement, and others of the components of the battery pack 1 such as the battery cells 2 are not limited to those disclosed in the present embodiment. The battery pack 1 can include a conductive member (a busbar) for electrically connecting the battery cells 2 to each other, a monitoring board for monitoring the voltage and temperature of the battery cells 2, and a control board for battery control. The battery pack 1 is also referred to as a battery module or a battery unit.

As illustrated in FIG. 2, the battery cells 2 are aligned in the X direction with outer faces 20i of the walls 20e facing in the same direction (upward). The battery cells 2 are arranged such that the positive electrodes 25A and the negative electrodes 25B are alternately arranged in the X direction, for example. The battery cells 2 are aligned in a row in the X direction and integrated with each other with the flange nuts 60 and the bolts 50 inserted into the openings 20r. The outer faces 20i of the walls 20e and 20f are an example of opposing faces.

The insulating plates 30 have a rectangular shape extending in the direction orthogonal to the X direction (YZ plane). The size of the insulating plates 30 is substantially the same as the size of the walls 20e and 20f. The insulating plates 30 are provided with openings 30r as mounting holes at the four corners corresponding to the openings 20r. The openings 30r pass through the insulating plates 30 in the X direction.

The insulating plates 30 include first plates 30A and second plates 30B, for example. The first plates 30A are each located between two adjacent battery cells 2 in the X direction. The second plates 30B are located at both X-directional ends of the battery cells 2, placing the battery cells 2 in-between them. The insulating plates 30 and the battery cells 2 are alternately stacked in the X direction. The first plates 30A are also referred to as intermediate plates, and the second plates 30B are also referred to as end plates.

The pipes 40 are of a hollow form extending in the X direction. The four pipes 40 are inserted into the respective openings 20r of the battery cells 2 aligned in the X direction. The pipes 40 each lie between an inner circumference 20r1 of the opening 20r and the shaft of the bolt 50 within the opening 20r of each of the battery cells 2. The pipes 40 are formed of an insulating material such as a synthetic resin material or rubber, for example.

The spacers 70 are provided at positions corresponding to the attachment tabs 20f1 of the battery cells 2. The spacers 70 are each placed between two adjacent attachment tabs 20f1 in the X direction, specifically, between the attachment tab 20f1 and the insulating plate 30. The spacers 70 are provided with respective openings 70a into which the pipes 40 are inserted. The openings 70a pass through the spacers 70 in the X direction. The spacers 70 are formed of an insulating material such as a synthetic resin material or rubber, for example.

The bolts 50 are inserted into the pipes 40, that is, hollows 40a. The bolts 50 and the flange nuts 60 correspond to every four pipes 40 (openings 20r). The second plates 30B, the spacers 70, the battery cells 2, and the first plates 30A are tightly held between the heads of the bolts 50 and the flange nuts 60, and integrated (joined) together in the X direction as the battery pack 1. The bolts 50 and the flange nuts 60 are examples of a fastening member.

In the present embodiment, a height h1 of the spacers 70 is set to smaller than a thickness (height) h2 of the battery cells 2 in the X direction, specifically, the space between the attachment tab 20f1 and the insulating plate 30. Further, the length of the pipes 40 is set to smaller than the sum of the thicknesses of the battery cells 2 and the insulating plates 30 in the X direction. Consequently, according to the present embodiment, in fixing the battery cells 2 with the bolts 50 and the flange nuts 60, for example, the casings 20 of the battery cells 2 can be compressed in the X direction. This can restrict electrodes (not illustrated) inside the casings 20 from swelling in the X direction from the initial state and prevent degradation in the performance of the battery cells 2 due to swollen electrodes, for example. In the present embodiment, the casings 20 are formed of stainless steel (SUS) with a relatively small thickness, whereby the casings 20 can be more elastically deformable than metal-case battery cells 2, for example, placing the battery cells 2 in compressed state in the X direction relatively easily.

As described above, in the present embodiment, the battery pack 1 includes the battery cells 2 aligned in the X direction and each provided with the openings 20r; the hollow pipes 40 inserted into the openings 20r in the X direction, the bolts 50 inserted into the hollows 40a of the pipes 40, and the insulating plates 30 placed between the outer faces 20i of the walls 20e and 20f of the battery cells 2, for example. With such a configuration, the pipes 40 and the bolts 50 can work to inhibit the battery cells 2 from being displaced at least along the YZ plane, for example. In addition, with the flange nuts 60 provided at one X-directional end of the bolts 50 to engage with the bolts 50, the battery cells 2 can be integrated (joined) together in the X direction.

In the present embodiment, the pipes 40 have insulating properties, for example. With such a configuration, the battery cells 2 can be inhibited from electrically connecting to each other via the bolts 50 even when the bars such as the bolts 50 are formed of a metallic material, for example.

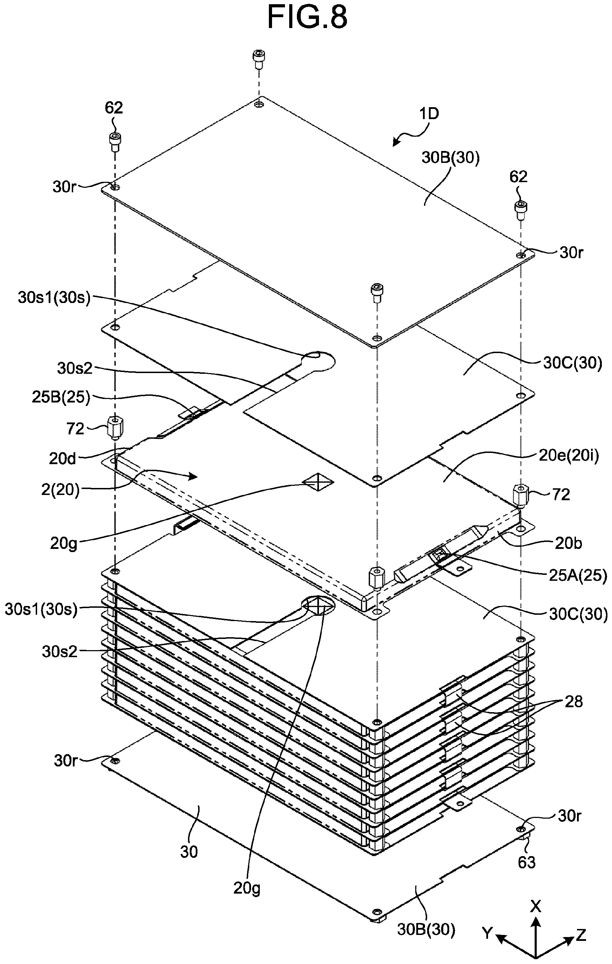

In the present embodiment, the battery cells 2 each include the walls 20b and 20d provided with the electrodes 25 and the wall 20c provided with the valve 20g for gas venting, for example. With such a configuration, the valve 20g is placed in the wall 20c different from the walls 20b and 20d provided with the electrodes 25, whereby the electrodes 25 and busbars 28 (refer to FIG. 8) can be less affected by gas discharged from the valve 20g, for example.

In the present embodiment, the battery cells 2 are provided with the openings 20r with spacing in the Y direction or the Z direction, for example. With such a configuration, the openings 20r, and the pipes 40 and the bolts 50 inserted into the respective openings 20r can work to restrain the battery cells 2 from rotating along the YZ plane, for example. Thus, this can further inhibit the battery cells 2 from being mutually displaced along the YZ plane, for example.

### First Modification of First Embodiment

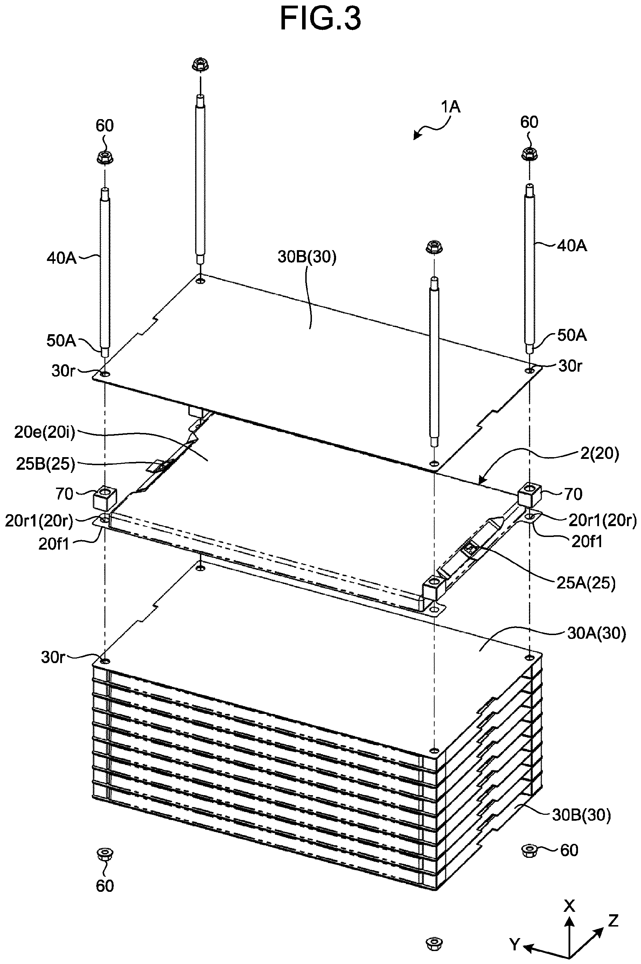

A battery pack 1A of a modification illustrated in FIG. 3 is configured similarly to the battery pack 1 of the first embodiment. Consequently, the present modification can also achieve similar results (effects) based on the configuration similar to that of the first embodiment.

However, the present modification is different from the first embodiment in that pipes 40A and bolts 50A are integrated with each other as illustrated in FIG. 3, for example. The bolts 50A are integrated with the pipes 40A serving as covers by molding or insulation coating, for example. Both X-directional ends of the bolts 50A are exposed from the pipes 40A, and these exposed parts are provided with male screws to engage with female screws of the flange nuts 60. Thus, in the present embodiment, owing to the integrated pipes 40A and bolts 50A, the number of parts and components of the battery pack 1A can be reduced, for example, which can reduce the time and effort and costs required for the manufacture (assembly) of the battery pack 1A.

### Second Embodiment

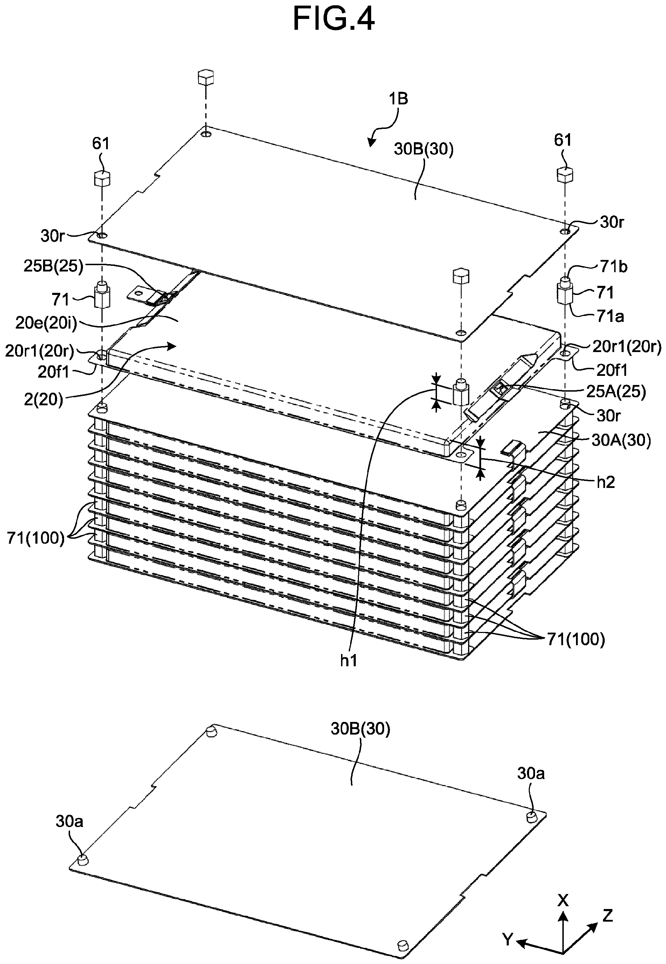

A battery pack 1B of an embodiment illustrated in FIGS. 4 to 6 is configured similarly to the battery pack 1 of the first embodiment. Consequently, the present embodiment can also achieve similar results (effects) based on the configuration similar to that of the first embodiment.

However, the present embodiment is different from the first embodiment in additionally including restricting members 100 including a plurality of spacers 71 aligned in the X direction as illustrated in FIG. 4, for example. The spacers 71 are an example of divided elements and can also be referred to as collars.

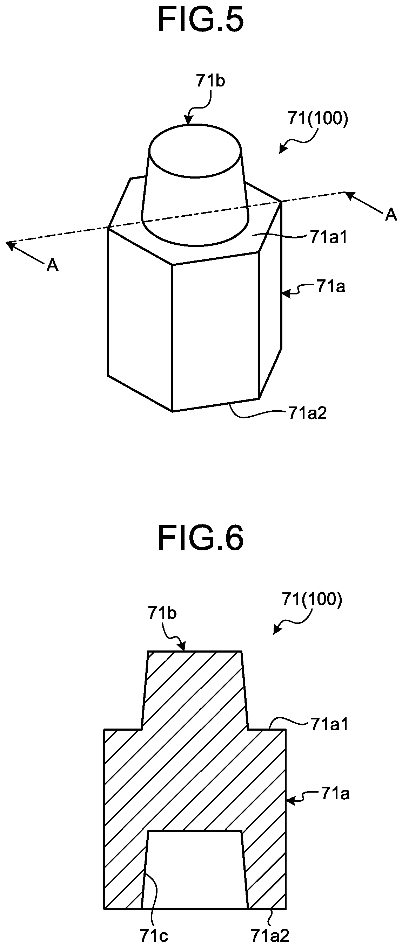

As illustrated in FIGS. 4 and 5, the spacers 71 each include a base 71a and a protrusion 71b, for example. The base 71a has a rectangular columnar shape extending in the X direction. The base 71a is placed between the attachment tabs 20f1 of two adjacent battery cells 2 in the X direction, specifically, between the attachment tab 20f1 and the insulating plate 30. As illustrated in FIG. 6, a bottom face 71a2 of the base 71a is provided with a recess 71c concaved upward (toward a top face 71a1). The recess 71c has a substantially conical shape with its opening gradually narrowing upward corresponding to the protrusion 71b (refer to FIG. 5).

The protrusion 71b is provided on the top face 71a1 of the base 71a and protrudes upward, that is, in the X direction. As illustrated in FIG. 4, the protrusion 71b is press-fitted into the recess 71c of an adjacent spacer 71 above through at least either the opening 30r of the insulating plate 30 or the opening 20r of the attachment tab 20f1 thereabove. Thereby, the spacers 71 are mechanically connected (fitted) to each other in order in the X direction, to integrate (join) the battery cells 2 in the X direction. In the present embodiment, one (bottom side) of the two second plates 30B is provided with protrusions 30a similar to the protrusions 71b to integrate with the battery cell 2, and the other (top side) is integrated with the battery cell 2 in the X direction with caps 61 provided with recesses (not illustrated) similar to the recesses 71c.

As illustrated in FIG. 5, the protrusion 71b has a substantially conical shape gradually decreasing in diameter upward corresponding to the recess 71c. In the present embodiment, by such a configuration (shape), the insertability of the protrusion 71b into the recess 71c is enhanced. The conical face (side face) of the protrusion 71b is set to slightly larger than the conical face of the recess 71c. This can more firmly connect (fit) the protrusion 71b and the recess 71, which makes it difficult for the spacers 71 to be disconnected from each other. The spacers 71 are formed of an insulating material such as a synthetic resin material or rubber, for example.

The height h1 (refer to FIG. 4) of the base 71a is set to smaller than the thickness (height) h2 of the battery cells 2 in the X direction, specifically, the space between the attachment tab 20f1 and the insulating plate 30. Thereby, in securing the battery cells 2 with the spacers 71, the casings 20 of the battery cells 2 can be compressed in the X direction, for example. Consequently, the casings 20 can be inhibited from swelling in the X direction, for example, avoiding degradation in the performance of the battery cells 2.

As described above, in the present embodiment, the battery pack 1B includes the restricting members 100 that are inserted into the respective openings 20r in the X direction to abut on the inner circumferences 20r1 of the openings 20r and restrict the battery cells 2 from moving along the YZ plane. The restricting members 100 include the spacers 71 divided in the X direction, for example. With such a configuration, the spacers 71 of the restricting members 100 can work to inhibit the battery cells 2 from being displaced at least along the YZ plane, for example. In addition, the battery cells 2 can be integrated (joined) together in the X direction by the protrusions 30a and the caps 61 at the end of the restricting members 100.

In the present embodiment, the spacers 71 each include the base 71a interposed between the openings 20r of the battery cells 2, and the protrusion 71b that protrudes in the X direction (upward) from the base 71a and is inserted into at least one of the openings 20r. The base 71a is provided with the recesses 71c connectable to the protrusions 71b of an adjacent spacer 71 in the opposite X direction (downward), for example. With such a configuration, the spacers 71 can be integrated in the X direction more easily by fitting the protrusions 71b into the recesses 71c, for example.

### First Modification of Second Embodiment

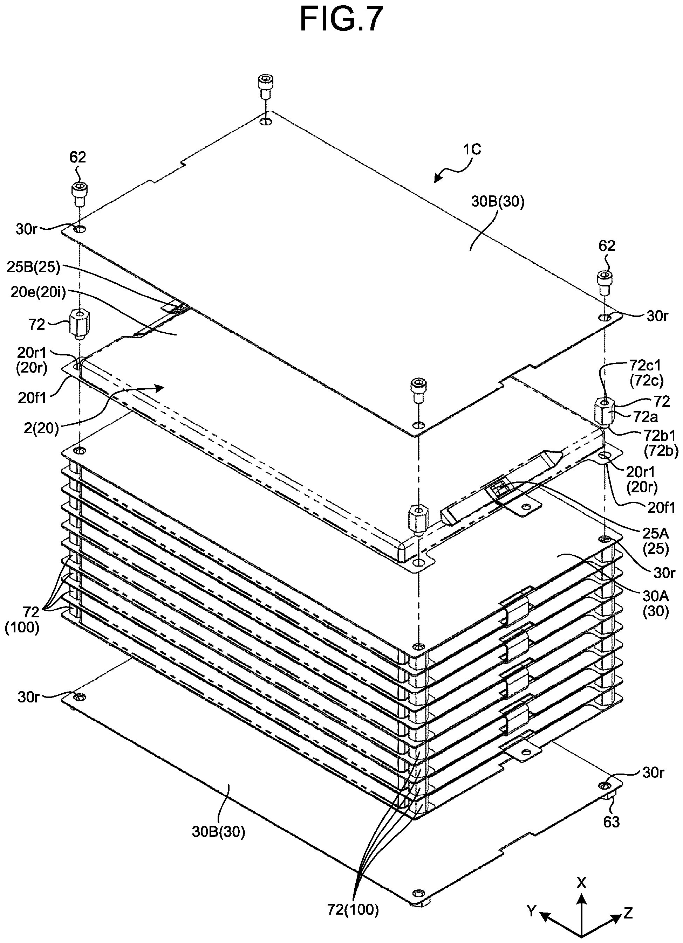

A battery pack 1C of a modification illustrated in FIG. 7 is configured similarly to the battery pack 1B of the second embodiment. Consequently, the present modification can also achieve similar results (effects) based on the configuration similar to that of the second embodiment.

However, the present modification is different from the second embodiment in that each spacer 72 is provided with a protrusion 72b having a male screw 72b1 and a recess 72c formed as a female screw 72c1 as illustrated in FIG. 7, for example. The spacers 72 are an example of divided elements and can also be referred to as spacer screws. The restricting members 100 each include spacers 72 aligned in the X direction.

The spacers 72 each include a base 72a and the protrusion 72b, for example. The protrusion 72b is provided on the bottom face of the base 72a and protrudes downward. The recess 72c is formed in the top face of the base 72a and is concaved downward. The spacers 72 are formed of an insulating material such as a synthetic resin material or rubber, for example.

The male screw 72b1 of the protrusion 72b is inserted into the recess 72c of an adjacent spacer 72 below and screwed into the female screw 72c1 through at least either the opening 20r of the attachment tab 20f1 or the opening 30r of the insulating plate 30 therebelow. Thereby, the spacers 72 are joined together in order in the X direction, to integrate (join) the battery cells 2 in the X direction. In the present embodiment, one (top) of the two second plates 30B is integrated with the spacer 72 in the X direction with bolts 62 each provided with a male screw to screw into the female screw 72c1 of the spacer 72. The other (bottom) is integrated with the spacer 72 in the X direction with nuts 63 each provided with a female screw to engage with the male screw 72b1 of the spacer 72.

As described above, in the present modification, the spacers 72 are integrated in the X direction by screwing the male screws 72b1 of the protrusions 72b into the female screws 72c1 in the recesses 72c, for example. With such a configuration, the battery cells 2 can be integrated more easily, more smoothly, or more firmly with the female screws 72c1 and the male screws 72b1 of the spacers 72. In addition, due to the spacers 72 having insulating properties, the battery cells 2 can be prevented from electrically connecting to each other via the spacers 72, for example.

### Third Embodiment

A battery pack 1D of an embodiment illustrated in FIG. 8 is configured similarly to the battery pack 1C of the first modification of the second embodiment. Consequently, the present embodiment can also achieve similar results (effects) based on the configuration similar to that of the first modification of the second embodiment.

However, the present embodiment is different from the first modification of the second embodiment in that the valve 20g for gas venting is provided on the wall 20e as illustrated in FIG. 8, for example. The wall 20e is an example of a second wall. The valve 20g is located at about the center of the wall 20e, for example.

In the present embodiment, the insulating plates 30 include the second plates 30B located on the top and the bottom, and third plates 30C interposed between the second plates 30B and the battery cells 2 and between the battery cells 2. The third plates 30C are each provided with a relief hole 30s for gas. The relief hole 30s can also be referred to as an exhaust passage.

The relief hole 30s includes a first hole 30s1 and a second hole 30s2, for example. The first hole 20s1 is an oblong hole (circular hole) and is aligned with the valve 20g in the X direction. The second hole 30s2 is slit-like and extends between the first hole 30s1 and one Z-directional end of the first plate 30A or the third plate 30C.

As described above, in the present embodiment, the valve 20g is provided in the wall 20e different from the walls 20b and 20d provided with the electrodes 25, and the insulating plate 30 is provided with the gas relief hole 30s, for example. With such a configuration, for example, gas, when released from the valve 20g, can be discharged to the location away from the electrodes 25 and the busbar 28 through the relief hole 30s.

### Fourth Embodiment

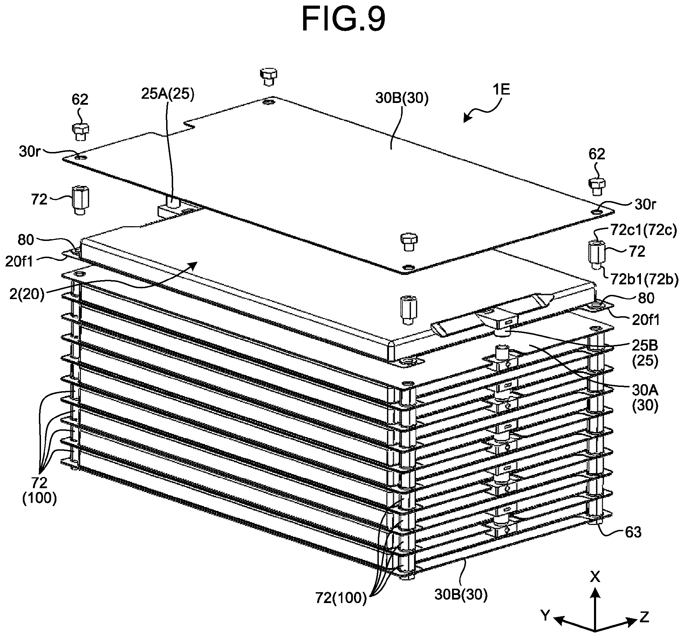

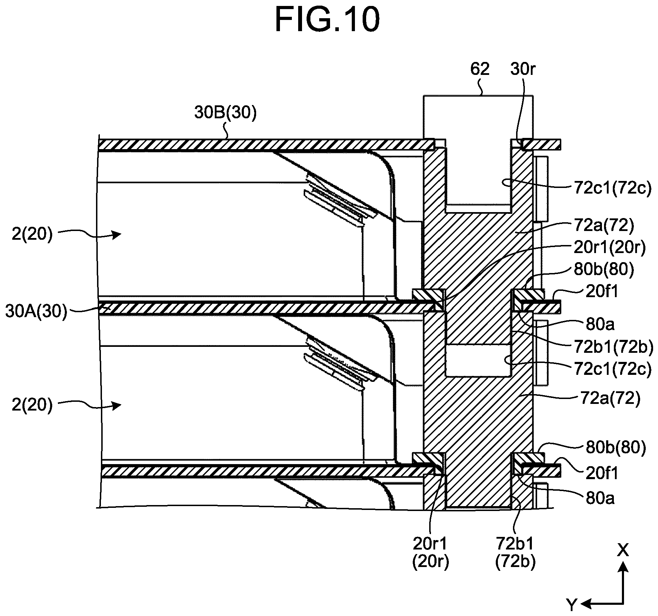

A battery pack 1E of an embodiment illustrated in FIGS. 9 and 10 is configured similarly to the battery pack 1C of the first modification of the second embodiment. Consequently, the present embodiment can also achieve similar results (effects) based on the configuration similar to that of the first modification of the second embodiment.

However, the present embodiment is different from the first modification of the second embodiment in that the battery cells 2 include insulating rings 80 in the openings 20r (the attachment tabs 20f1) as illustrated in FIG. 9, for example. The insulating rings 80 are an example of an insulating member.

As illustrated in FIG. 10, the insulating rings 80 each include an insertion 80a and a flange 80b, for example. The insertion 80a has a ring shape along the inner circumference 20r1 of the opening 20r and is inserted into the opening 20r. The insertion 80a is located between the inner circumference 20r1 and the protrusion 72b (the male screw 72b1). The insertion 80a can also be referred to as a protrusion, an interposition, a protector, or a contact preventer. The insertion 80a is an example of a first insertion.

The flange 80b projects from one (upper) X-directional end of the insertion 80a to the YZ plane along the attachment tab 20f1. The flange 80b lies between the bottom of the base 72a and the attachment tab 20f1.

As described above, in the present embodiment, the battery pack 1E includes the insulating rings 80 each including the insertion 80a to be inserted into the opening 20r and located between the protrusion 72b and the inner circumference 20r1, for example. With such a configuration, the battery cells 2 can be inhibited from electrically connecting to each other via the spacers 72 even when at least part of the spacer 72 such as the protrusions 72b (the male screws 72b1) are formed from a metallic material, for example.

### First Modification of Fourth Embodiment

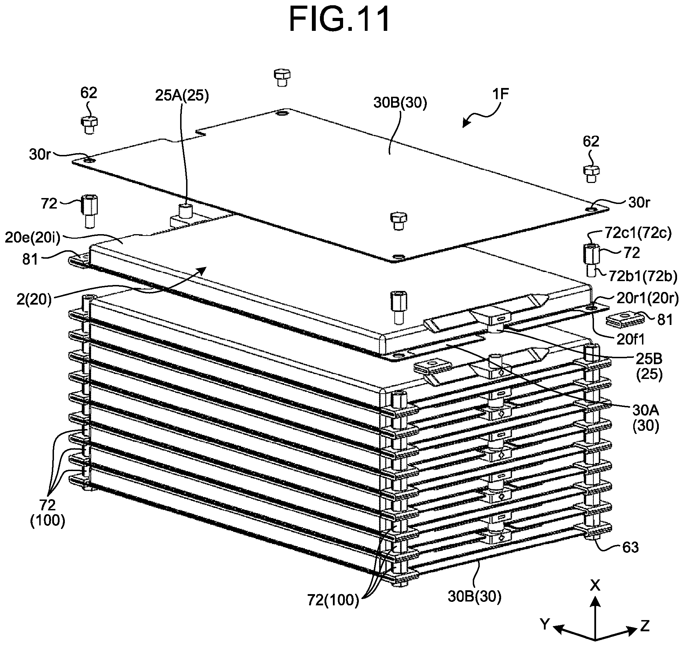

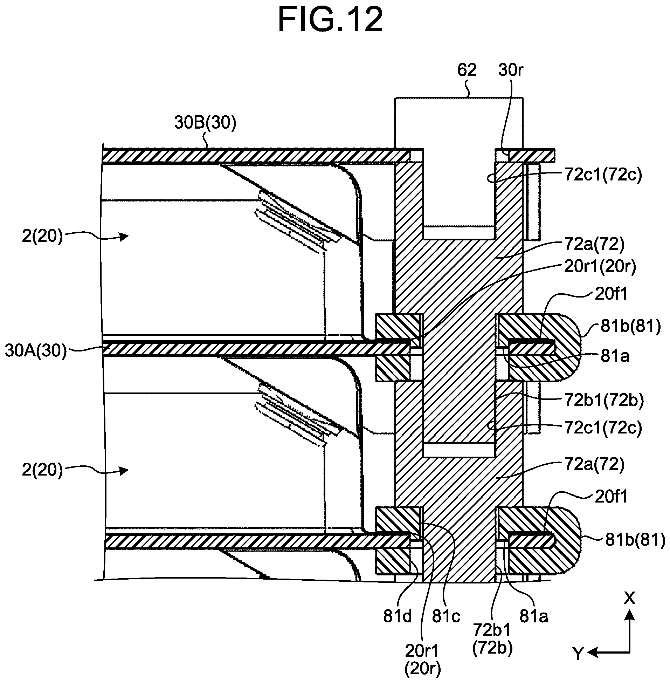

A battery pack 1F of a modification illustrated in FIGS. 11 and 12 is configured similarly to the battery pack 1E of the fourth embodiment. Consequently, the present modification can also achieve similar results (effects) based on the configuration similar to that of the fourth embodiment.

However, the present modification is different from the fourth embodiment in that the battery cells 2 include insulating clips 81 in the openings 20r (the attachment tabs 20f1) as illustrated in FIG. 11, for example. The insulating clips 81 are an example of an insulating member.

As illustrated in FIG. 12, the insulating clips 81 each include an insertion 81a and a clip 81b, for example. The clip 81b has a substantially U shape opening in the Y direction in FIG. 12 (viewed from the Z direction). The attachment tab 20f1 and the insulating plate 30 are held by the clip 81b. The U-shaped part of the clip 81b is provided with openings 81c and 81d into which the protrusion 72b of the spacer 72 is inserted. The two opening parts 81c and 81d are aligned with each other in the X direction. The opening width (diameter) of the opening 81c at one (upper) side is smaller than the opening width (diameter) of the opening 81d at the other (lower) side in the X direction.

The insertion 81a protrudes from the inner edge of the opening 81c toward the opening 81d. The insertion 81a has a ring shape along the inner circumference 20r1 of the opening 20r and is inserted into the opening 20r. The insertion 81a is located between the inner circumference 20r1 and the protrusion 72b (the male screw 72b1) of the spacer 72. The insertion 81a can also be referred to as a protrusion, an interposition, a protector, or a contact preventer. The insertion 81a is an example of a first insertion. The insulating clips 81 of the present embodiment can attain effects substantially similar to those of the insulating rings 80 of the fourth embodiment.

### Fifth Embodiment

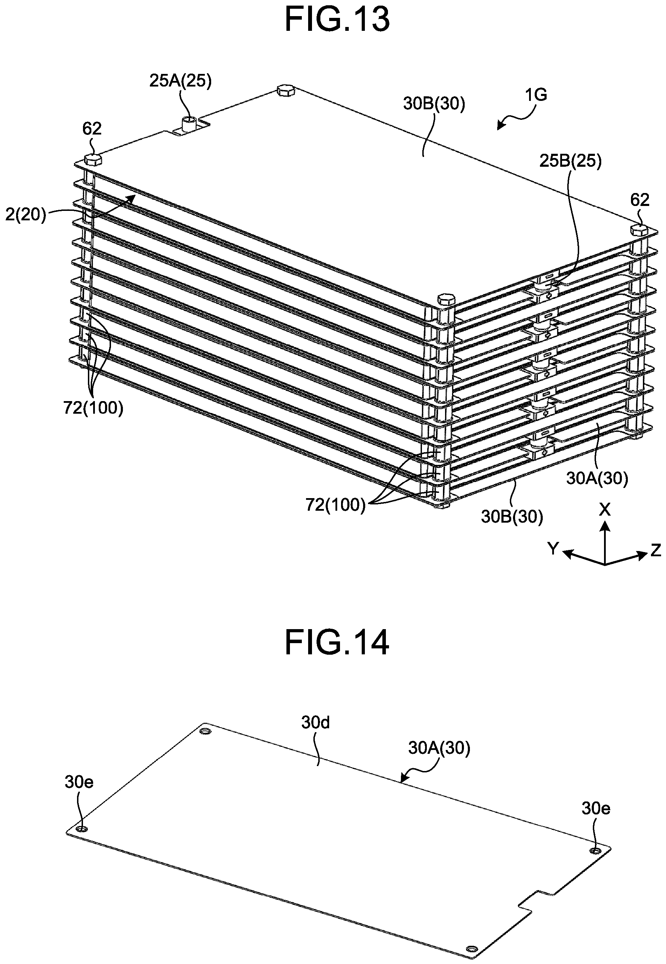

A battery pack 1G of an embodiment illustrated in FIGS. 13 to 15 is configured similarly to the battery pack 1E of the fourth embodiment. Consequently, the present embodiment can also achieve similar results (effects) based on the configuration similar to that of the fourth embodiment.

However, the present embodiment is different from the fourth embodiment in that the insulating plates 30 are provided with protrusions 30e as illustrated in FIGS. 13 to 15, for example. The protrusions 30e are an example of a second insertion.

The insulating plates 30 each include a plate 30d and the protrusions 30e, for example. The plate 30d has a rectangular shape extending in the direction orthogonal to the X direction (YZ plane). The plate 30d is located on the opposing faces of the battery cells 2, that is, between the outer faces 20i of the walls 20e and 20f. The plate 30d is also referred to as a base. The plate 30d is provided with openings 30r as mounting holes at the four corners.

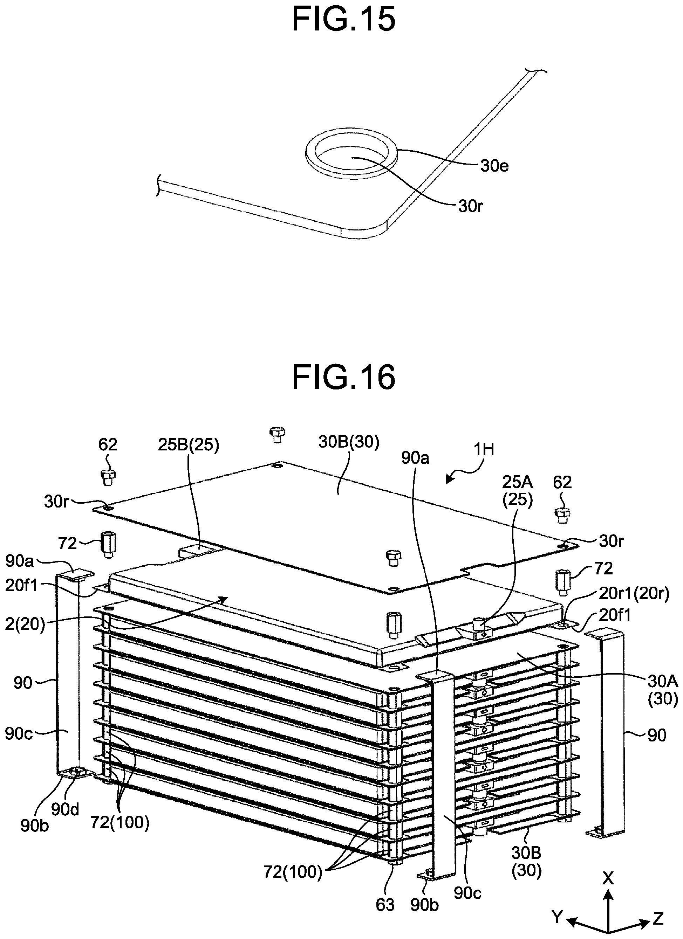

As illustrated in FIG. 15, the protrusion 30e protrudes upward from the inner edge of the opening 30r, that is, in the X direction. The protrusion 30e has a ring shape along the inner circumference 20r1 of the opening 20r (refer to FIG. 10) and is inserted into the opening 20r. The protrusion 30e is located between the inner circumference 20r1 and the protrusion 72b (the male screw 72b1) of the spacer 72. The protrusion 30e can also be referred to as a protrusion, an interposition, a protector, or a contact preventer. In the present embodiment, one (top side) of the two second plates 30B is not provided with the protrusions 30e. The protrusions 30e of the insulating plates 30 of the present embodiment can attain effects substantially similar to those of the insulating rings 80 of the fourth embodiment.

### Sixth Embodiment

A battery pack 1H of an embodiment illustrated in FIGS. 16 to 20 is configured similarly to the battery pack 1E of the fourth embodiment. Consequently, the present embodiment can also achieve similar results (effects) based on the configuration similar to that of the fourth embodiment.

However, the present embodiment is different from the fourth embodiment in additionally including support members 90 as illustrated in FIGS. 16 to 18, for example.

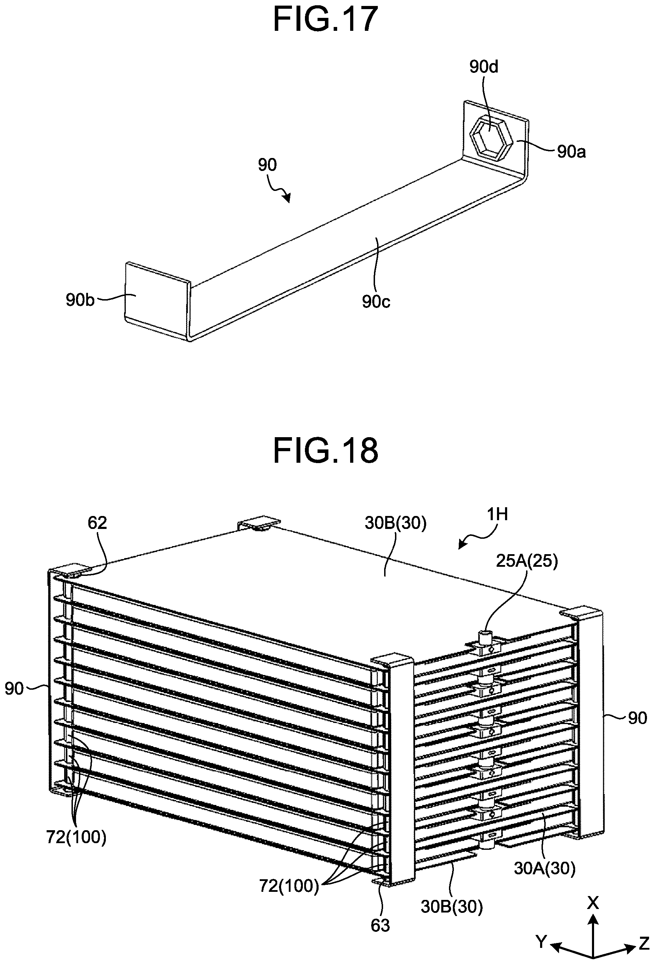

The support members 90 have a substantially U shape opening in the Y direction as viewed from the Z direction. The support members 90 each include two supports 90a and 90b at both X-directional ends and a connection 90c that connects the two supports 90a and 90b. One of the supports 90a and 90b supports one X-directional end of the battery cells 2, while the other supports the other X-directional end of the battery cells 2. In other words, the support members 90 hold the battery cells 2 between the two supports 90a and 90b. The support members 90 can be formed of spring steel or stainless steel, for example. The support members 90 can support (integrate) the battery cells 2 and the insulating plates 30 while pressed to approach each other by force from the elastic deformation of the two supports 90a and 90b. According to the present embodiment, it is thus made possible to more firmly integrate the components including the battery cells 2 and ensure the compressed state of the battery cells 2 in the X direction, for example. The two supports 90a and 90b are each provided with a recess 90d (refer to FIG. 17) into which the head of the bolt 62 or the nut 63 fits.

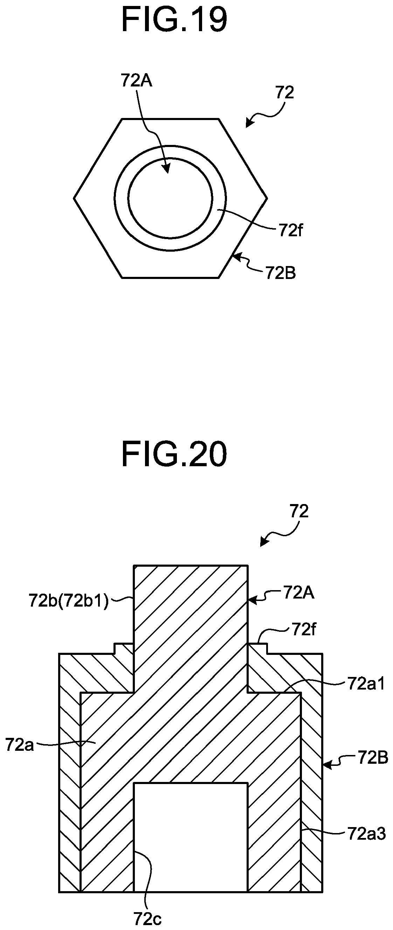

As illustrated in FIGS. 19 and 20, in the present embodiment, the spacer 72 includes a first component 72A and a second component 72B, for example. The first component 72A is provided with the base 72a and the protrusion 72b. The first component 72A is a spacer screw or a screw joint formed of metal, for example. The second component 72B covers a side face 72a3 and a top face 72a1 of the base 72a. The second component 72B is a cover formed of an insulating material such as a synthetic resin material or rubber, for example. The second component 72B is provided with a ring-shaped protrusion 72f. The protrusion 72f is inserted into the opening 20r (refer to FIG. 10) together with the protrusion 72b to be located between the inner circumference 20r1 and the protrusion 72b (the male screw 72b1). The protrusion 72f can also be referred to as an insertion, an interposition, a protector, or a contact preventer. The protrusion 72f is an example of a third insertion. The protrusions 72f of the second components 72B of the present embodiment can attain effects substantially similar to those of the insulating rings 80 of the fourth embodiment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. The present invention can also be implemented by configurations other than those disclosed in the embodiments and can achieve various effects (including derivative effects) achieved by the basic configuration (technical features). The specifications (structure, type, direction, shape, size, length, width, thickness, height, number, arrangement, position, material, and the like) of the elements can be changed as appropriate.

## Claims

1. A battery pack comprising:
a plurality of battery cells that is aligned in a first direction and each provided with an opening;
a hollow pipe to be inserted into each opening in the first direction;
a bar to be inserted into a hollow of the pipe; and
an insulating plate provided between opposing faces of the battery cells.

2. The battery pack according to claim 1, wherein
the pipe has insulating properties.

3. The battery pack according to claim 1 or 2, wherein the bar and the pipe are integrated with each other.

4. A battery pack comprising:
a plurality of battery cells that is aligned in a first direction and each provided with an opening;
a restricting member that is inserted into each opening in the first direction to abut on an inner circumference of the opening to restrict the battery cells from moving in a direction crossing the first direction; and
an insulating plate provided between opposing faces of the battery cells, wherein
the restricting member includes a plurality of divided elements that is divided in the first direction.

5. The battery pack according to claim 4, wherein
the divided elements each include:
a base interposed between the openings of the battery cells; and
a protrusion that protrudes from the base to one side in the first direction and is inserted into at least the opening located on the one side, and
the base is provided with a recess that is connectable to the protrusion of an adjacent divided element on the other side in the first direction.

6. The battery pack according to claim 5, wherein
the divided elements are integrated together in the first direction by fitting the protrusions into the recesses.

7. The battery pack according to claim 5, wherein
the divided elements are integrated together in the first direction by screwing male screws formed on the protrusions into female screws formed in the recess.

8. The battery pack according to any one of claims 5 to 7, wherein
the base is shorter in height than the battery cells in the first direction.

9. The battery pack according to any one of claims 5 to 8, comprising
an insulating member including a first insertion that is inserted into the opening to be located between the protrusion and the inner circumference.

10. The battery pack according to any one of claims 5 to 9, wherein
the insulating plate includes:
a plate; and
a second insertion that protrudes from the plate into the opening to be located between the protrusion and the inner circumference.

11. The battery pack according to any one of claims 5 to 10, wherein
the divided elements each include:
a first component including the base and the protrusion; and
a second component that covers the first component and has insulating properties, and
the second component is provided with a third insertion that is inserted into the opening together with the protrusion to be located between the protrusion and the inner circumference.

12. The battery pack according to any one of claims 1 to 11, comprising
a support member of a leaf spring form including a first support, a second support, and a connection to hold the battery cells between the first support and the second support, the first support that supports one end of the battery cells in the first direction, the second support that supports the other end of the battery cells in the first direction, the connection that connects between the first support and the second support.

13. The battery pack according to any one of claims 1 to 12, wherein
the battery cells each include:
a first wall provided with an electrode; and
a second wall provided with a valve for gas venting and different from the first wall.

14. The battery pack according to any one of claims 1 to 13, wherein
the battery cells are each provided with a plurality of openings with spacing in a direction crossing the first direction.
